# EUROPÄISCHE PATENTSCHRIFT

(11) **EP 2 087 984 B1**
(45) Veröffentlichungstag und Bekanntmachung des Hinweises auf die Patenterteilung: **12.05.2010**
(21) Anmeldenummer: 08151055.4
(22) Anmeldetag: 05.02.2008
(51) Int. Cl.: B29C 43/46

(54) **Walze zum Ausüben von Anpressdruck auf Materialbahnen**
Roller for applying contact pressure to sheets of material
Cylindre destiné à exercer une pression de contact sur des bandes de matériau

(43) Veröffentlichungstag der Anmeldung: 12.08.2009
(73) Patentinhaber: Texmag GmbH Vertriebsgesellschaft, 8800 Thalwil (CH)
(72) Erfinder: Malterer, Christian, 86157 Augsburg (DE); Roessle, Thomas, 86368 Gersthofen-Batzenhofen (DE)
(74) Vertreter: Peterreins, Frank

(56) Entgegenhaltungen:
- WO-A-01/28754
- WO-A-90/13706
- WO-A-91/05913
- WO-A-2006/044271
- DE-A1- 1 940 175
- DE-A1- 4 203 497

## Beschreibung

### Technisches Gebiet

Dieses Dokument bezieht sich auf Walzen zum Ausüben von Anpressdruck auf eine oder mehrere Materialbahnen.

### Hintergrund

Bei der Herstellung von Reifen werden Materialbahnen miteinander verbunden. Hierzu wird eine Gummibahn mit einem geeigneten Druck auf eine andere Gummibahn gepresst. Hierdurch werden die beiden Bahnen dauerhaft miteinander verbunden. Häufig sind jedoch Bahnen, die miteinander verbunden werden sollen nicht eben. So tritt es regelmäßig auf, dass eine streifenartige schmale Bahn auf eine sehr viel breitere Bahn aufgebracht werden soll. Der benötigte Druck wird mit Hilfe von Walzen erzeugt. Es sind Kaschierwalzen bekannt, bei denen eine Vielzahl von einzelnen Scheiben auf einer Achse befestigt sind.

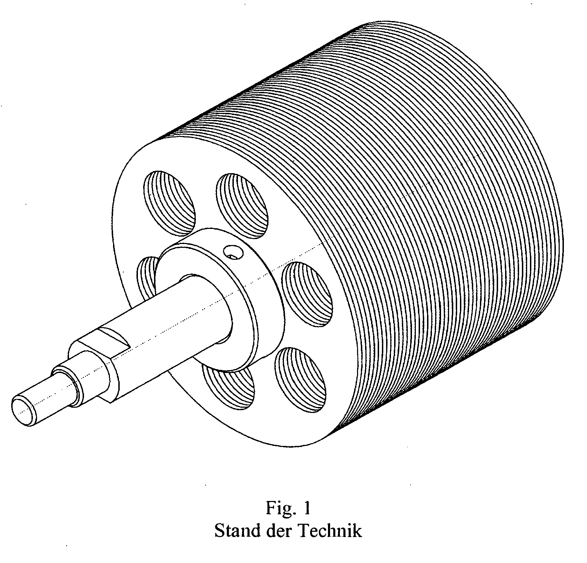

Eine schematische perspektivische Teilansicht einer solchen bekannten Kaschierwalze ist in Fig. 1 gezeigt. Hier sind eine Vielzahl von Scheiben zu sehen, die auf einer Achse befestigt sind. Die einzelnen Scheiben sind anti-haft beschichtet und können sich unabhängig voneinander um die Achse der Walze drehen. Die Scheiben weisen in ihrer Mitte jeweils Löcher auf, die deutlich größer sind als der Durchmesser der Achse, so dass sich die Scheiben in radialer Richtung mit Bezug auf die Achse bewegen können. Durch die Tatsache, dass sich die einzelnen Scheiben der Kaschierwalze gegeneinander verschieben können, kann sich die Walze der Oberflächenkontur der zu verbindenden Materialbahnen anpassen. Der Anpressdruck wird durch das Eigengewicht der Scheiben hervorgerufen. Somit ist die Richtung der Anpresskraft nur in Richtung der Schwerkraft möglich. Um einen hinreichend großen Anpressdruck zu erzielen, sind folglich Scheiben mit einem dementsprechend großen Eigengewicht erforderlich. Zudem muss sichergestellt werden, dass die einzelnen Scheiben nicht aneinander haften, da sonst nicht der gewünschte Anpressdruck über die ganze Breite erzielt werden kann. Hierzu ist eine entsprechend gute und aufwendige Oberflächenbeschichtung der einzelnen Scheiben erforderlich. Dies gilt insbesondere, da auch ein Haften der Scheiben aneinander vermieden werden muss, selbst wenn sich z.B. Gummiabrieb zwischen den Scheiben festsetzt.

WO 2006/044271 A offenbart Filmlaminierungsfahrzeuge und Verfahren, die verwendet werden können, um Filme auf Oberflächen zu laminieren. Die Fahrzeuge und Verfahren verwenden eine sich bewegende Laminierungsvorrichtung, die eine Laminierungsfront bildet, über die der Film auf die Überfläche aufgetragen wird. Die Laminierungsfront folgt Unregelmäßigkeiten in der Oberfläche, wie Senken, Buckel, etc., während sie einen im Wesentlichen gleichmäßigen Druck bereit stellt, so dass der Film der Oberfläche entspricht.

WO 90/13706 A offenbart eine Walze zur Druckbehandlung von Bahnen, zum Beispiel Papier, Zellstoff oder Pappe, die eine Hülle aus einzelnen, benachbarten keramischen Ringen aufweist, die axial vorgespannt sind durch eine oder mehrere Spannstäbe und durch zusätzliche Zentrierungsmittel konzentrisch zu der Achse geführt sind. Die Walze kann sowohl als Nasspresswalze in Papierherstellungsmaschinen als auch als Hartkalanderwalze für Glanzpapier verwendet werden.

### Zusammenfassung der Erfindung

Es werden Walzen zum Ausüben von Anpressdruck auf eine oder mehrere Materialbahnen gemäß Patentanspruch 1 und deren Verwendung gemäß Patentanspruch 11 offenbart. Die abhängigen Patentansprüche enthalten vorteilhafte Ausgestaltungen der Erfindung.

Eine Walze zum Ausüben von Anpressdruck auf eine oder mehrere Materialbahnen weist eine Walzenachse auf, auf der sich eine Mehrzahl von Scheiben befinden. Die Scheiben sind radial beweglich und üben den Anpressdruck auf die eine oder mehreren Materialbahnen aus. Der Anpressdruck der Scheiben kann pneumatisch oder hydraulisch ausgeübt oder gesteuert werden.

Der Anpressdruck der Scheiben wird über einen Innendruck im Inneren der Walze gesteuert. Der Innendruck im Inneren der Walze kann räumlich gerichtet auf die Scheiben wirken. Räumlich gerichtet bedeutet, dass die Scheiben insbesondere in eine Richtung, vorzugsweise gegen die Materialbahnen, gedrückt werden und dies unabhängig von der Schwerkraft.

Die Walzenachse ist eine Hohlachse, welche einen Ausschnitt aufweist, so dass über einen Innendruck in einem Walzenachseninnenkörper, der sich in der Walzenachse befindet, der Anpressdruck der Scheiben gesteuert werden kann. Der Walzenachseninnenkörper kann einen Schlauch und eine schlauchförmige Trennschicht umfassen, wobei die Trennschicht den Schlauch umgibt und sich zwischen Schlauch und Scheiben befindet. Die Trennschicht kann direkt auf dem Schlauch aufgebracht sein.

Die Trennschicht besteht in einigen Ausführungsformen zumindest teilweise aus Federblech, insbesondere aus einem Federstahl-Kammblech, oder aus Folie. Der Schlauch kann an seinen beiden Seiten durch je einen Stopfen verschlossen sein.

In verschiedenen Ausführungsformen kann die Walze eines oder mehrere der folgenden Merkmale aufweisen. Der Innendruck in dem Schlauch kann mit Hilfe eines Ventils in einem der Stopfen gesteuert werden. Die Scheiben können seitlich durch Stellringe auf der Achse gehalten werden. Die Scheiben können mit einer Anti-Haftbeschichtung versehen sein. Weiterhin kann der Anpressdruck über die Steuerung des Innendrucks des Walzeninnenkörpers während des Betriebs der Walze geändert werden. Bei einigen Ausführungsformen kann der Innendruck des Walzenachseninnenkörpers mit Hilfe eines elektronischen Feindruckventils während der Produktion an Prozessparameter angepasst werden.

Eine derartige Walze kann bei der Laminierung von Materialbahnen, insbesondere bei der Laminierung im Rahmen von Reifenherstellung verwendet werden.

Der Anpressdruck, den die Walze auf die zu verbindenden Bahnen ausübt, wird über den Druck im Innenraum der Achse gesteuert. Hierdurch kann die Walze für eine Vielzahl von unterschiedlichen Anwendungen eingesetzt werden, ohne dass konstruktive Änderungen vorgenommen werden müssen. Sogar während eines Bearbeitungsvorgangs kann der Anpressdruck, der von der Walze ausgeübt wird, angepasst werden. Durch eine einseitige Aussparung in der Achse wird der Druck zielgerichtet vom Inneren der Achse auf die einzelnen Scheiben übertragen. Der Innendruck in der Walze kann pneumatisch oder hydraulisch gesteuert werden. Hierdurch kann mit deutlich leichteren Scheiben bzw. mit Scheiben mit kleineren Dimensionen gearbeitet werden, da nicht länger das Eigengewicht der Scheiben allein für den erzeugten Anpressdruck verantwortlich ist. Dies ermöglich mit deutlich kostengünstigeren Scheiben zu arbeiten. Die Gefahr, dass Scheiben aneinander haften und so kein gleichmäßiger Anpressdruck erzielt wird, ist somit deutlich reduziert.

### Kurzbeschreibung der Zeichnungen

Die vorliegende Erfindung wird nachfolgend anhand bevorzugter Ausführungsformen unter Bezug auf die beigefügten Zeichnungen erläutert.
- FIG. 1: ist eine schematische perspektivische Ansicht einer bekannten Kaschierwalze;
- FIG. 2: ist eine schematische Explosionsdarstellung einer Walze;
- FIG. 3: ist eine schematische perspektivische Ansicht der Walze aus FIG. 2;
- FIG. 4: ist eine schematische Frontansicht einer Walze;
- FIG. 5: ist eine schematische Schnittansicht entlang der Linie B-B aus FIG. 4;
- FIG. 6: ist eine schematische Seitenansicht einer Walze;
- FIG. 7: ist eine schematische Schnittansicht entlang der Linie A-A aus FIG. 6.

### Detaillierte Beschreibung der Zeichnungen

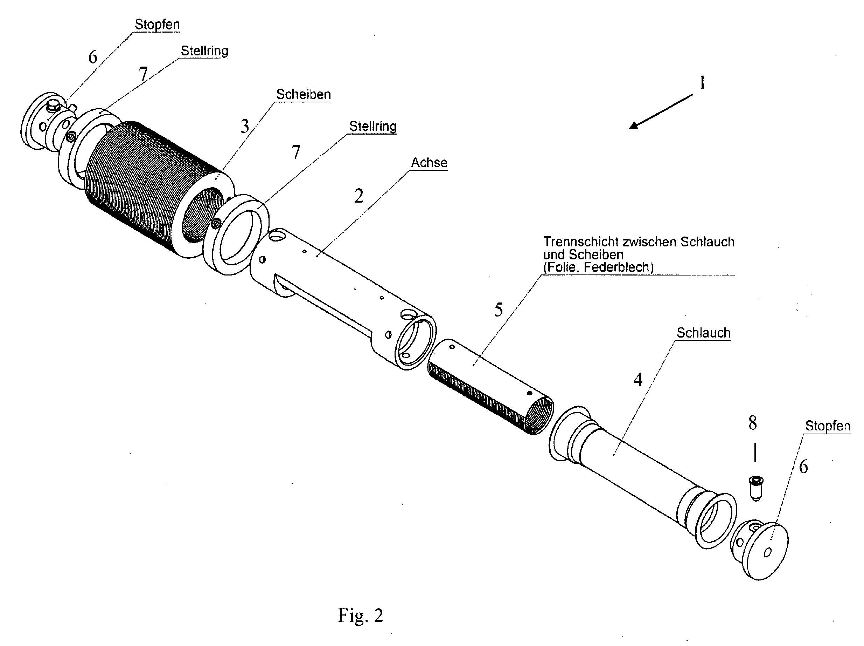

FIG. 2 zeigt eine beispielhafte Ausführungsform einer Walze 1 zum Ausüben von Anpressdruck auf eine oder mehrere Materialbahnen. Mit Hilfe dieser Explosionsdarstellung soll ein möglicher Aufbau und dessen Funktionsweise erläutert werden.

Die Achse 2 ist in dem Beispiel der FIG. 2 als Hohlachse ausgeführt. Die Achse 2 weist einen nach unten gerichteten Ausschnitt auf. In die Achse 2 wird eine Trennschicht 5 eingeführt und dort befestigt. Ein Schlauch 4 wird so in der Achse 2 positioniert, dass sich die Trennschicht 5 zwischen Achse 2 und Schlauch 4 befindet. Die Trennschicht 5 kann zum Schutz des Schlauchs 4 dienen. Weiterhin dient sie der Kraftübertragung von dem Schlauch 4 auf die Scheiben 3.

Die Trennschicht 5 kann zumindest teilweise aus einem Federblech oder einer Folie bestehen. In bestimmten Ausführungsformen kann die Trennschicht 5 ein Federstahl-Kammblech umfassen, über welches die Kraft vom Schlauch 4 auf die Scheiben 3 übertragen wird. Durch ein derartiges Federstahl-Kammblech kann eine zusätzliche vorbestimmte Kraft auf die einzelnen Scheiben 3 je nach ihrer radialen Position ausgeübt werden.

Die Enden des Schlauchs 4 werden mit Stopfen 6 verschlossen. Mindestens einer der Stopfen 6 weist in einigen bevorzugten Ausführungsformen ein Ventil 8 auf, über das der Innendruck im Schlauch 4 geregelt werden kann. Die Stopfen 7 können an ihren äußeren Stirnseiten Aussparungen oder Vorsprünge aufweisen, an welchen die Walze 1 befestigt werden kann.

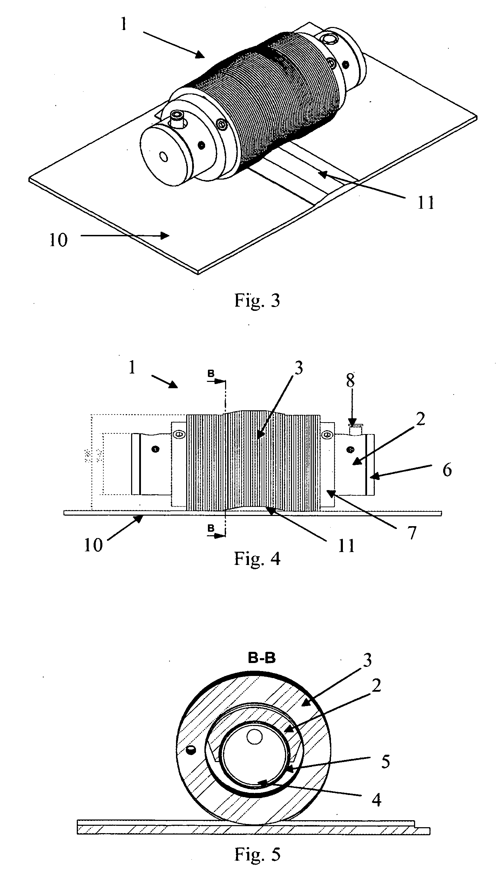

Auf die Achse 2 werden einzelne Scheiben 3 aufgeschoben. Die Scheiben 3 können sich um die feststehende Achse 2 drehen. In bestimmten Ausführungsformen wird die Walze 1 derart montiert, dass die Achse 2 feststehend ist, während sich im Betrieb nur die Scheiben 3 um die Achse 2 drehen. Seitlich können die Scheiben 3 durch Stellringe 7 fixiert werden, damit sie ihre laterale Position auf der Achse 2 nicht verändern können. Die Dicke der Scheiben 3 wird in Abhängigkeit von der Anwendung ausgewählt. Der Durchmesser der Löcher in den Scheiben 3 ist auf den Außendurchmesser der Achse 2 derart abgestimmt, dass sich die Scheiben 3 in radialer Richtung in Bezug auf die Achse 2 verschieben können. So können sich die Scheiben 3 der Oberflächenkontur einer oder mehrerer Materialbahnen anpassen. Dies wird mit Bezug auf die Figuren 3 und 4 weiter verdeutlicht werden.

FIG. 2 zeigt eine perspektivische Ansicht der Walze 1 in Kombination mit zwei Materialbahnen 10, 11. Die beiden Materialbahnen können zum Beispiel aus einem gummiartigen Material bestehen. Um sie durch Anpressdruck miteinander zu verbinden, kann eine Walze 1 gemäß einer der hier beschriebenen Ausführungsformen verwendet werden. Bei einem Verbinden der beiden Materialbahnen 10, 11 kann zusätzlich Klebstoff eingesetzt werden. Ebenfalls ist es möglich, den Prozess bei erhöhter Temperatur durchzuführen. Die hier beschriebenen Walzen sind in keiner Weise auf den Anwendungsbereich bei der Verbindung von gummiartigen Materialien beschränkt. Sie können ebenfalls für andere Prozesse eingesetzt werden, bei denen Druck mittels einer Walze 1 aufgebracht werden soll.

Aus FIG. 3 ist ebenfalls ersichtlich, dass sich die Scheiben 3 so in radialer Richtung gegenüber der Achse 2 verschieben, dass sie sich der Oberflächenkontur der Materialbahnen 10, 11 anpassen. In diesem Beispiel sind die inneren Scheiben der Walze 1 nach oben verschoben. Die Schrägen der Materialbahn 11 werden ebenfalls durch die Scheiben 3 nachgebildet.

FIG. 4 zeigt eine Frontansicht einer beispielhaften Walze 1. Auf Grund der Materialbahn 11 sind die Scheiben 3, die sich über dieser Materialbahn befinden, entsprechend radial nach oben verschoben, so dass sie die Oberflächenkontur der Materialbahnen 10, 11 nachbilden. Die Achse 2 samt Stopfen 6 und Ventil 8 sind hier ebenso zu sehen, wie die Stellringe 7. In diesem Beispiel hat die Achse 2 einen Außendurchmesser von 42 mm während sich der Außendurchmesser der Scheiben 3 auf 66 mm beläuft. Diese Werte sind nur beispielhaft und können gemäß dem gewünschten Einsatzzweck ausgewählt werden.

FIG. 5 zeigt eine Schnittansicht entlang der Linie B - B aus FIG. 4. Hier ist der Aufbau der Achse 2 sowie des Schlauches 4, Trennschicht 5 und Scheiben 3 gemäß einer Ausführungsform gezeigt. Die Achse 2 weist nach unten hin einen Ausschnitt auf, damit die Kraft von dem Schlauch 4 über die Trennschicht 5 auf die Scheiben 3 übertragen werden kann. In diesem Beispiel ist nahezu das gesamte untere Halbsegment der Achse 2 ausgespart. Wie in diesem Beispiel gezeigt, kann die Achse 2 zu der Aussparung hin Abflachungen aufweisen. Dies ist insbesondere erforderlich, wenn der Außendurchmesser der Achse 2 und der Innendurchmesser der Scheiben 3 ähnlich sind und die Achse 2 nahezu ein Halbkreissegment oder mehr ist, da konstruktiv sicher gestellt werden sollte, dass sich die Scheiben 3 in der Ansicht der FIG. 5 in vertikaler Richtung gegenüber der Achse 2 verschieben können. Die Verschiebbarkeit der Scheiben 3 in radialer Richtung, welche in FIG. 5 zugleich die vertikale Richtung ist, muss durch die Konstruktion der Walze und insbesondere durch die Abstimmung der Achse 2 auf die Scheiben 3 sichergestellt werden. Das hier gezeigte Beispiel stellt nur eine von vielen Möglichkeiten dar, diese Bedingung zu erfüllen.

Über die Trennschicht 5, die beispielsweise aus einem Federblech besteht, wird die Kraft, die durch den Innendruck im Schlauch 4 erzeugt wird, auf die Scheiben 3 übertragen. In dem hier gezeigten Beispiel ist der Innendruck in dem Schlauch 4 jedoch so gering, dass die Trennschicht 5 noch nicht gegen die Scheiben 3 gedrückt wird. Wenn beispielsweise die Achse 2 der Walze 1 abgesenkt würde, so würde die Trennschicht 5 mit den Scheiben 3 in Kontakt kommen. Je nachdem, wie der Anpressdruck sich von Scheibe zu Scheibe ändern soll können unterschiedliche Materialien und/oder Gestaltungen für die Trennschicht 5 gewählt werden. Es können beispielsweise Folien oder Bleche unterschiedlicher Dicken und mit unterschiedlichen Elastizitätsmodulen verwendet werden. Es können auch Federstahl-Kammbleche verwendet werden, um eine vorbestimmte zusätzliche Rückstellkraft für jede Scheibe über die Trennschicht 5 bereitzustellen.

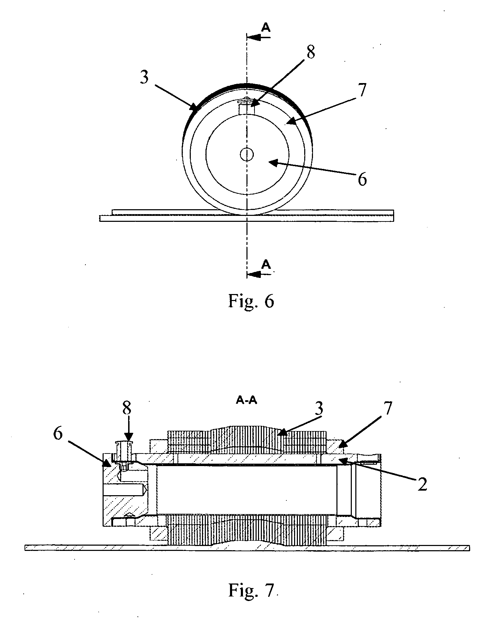

FIG. 6 stellt eine beispielhafte Seitenansicht dar. Hier ist die Stirnseite mit einem Stopfen 6 und einem Ventil 8 zu sehen. Ebenfalls ist ein Stellring 7 und die Scheiben 3 zu sehen. In dieser Ausführungsform weist der Stopfen 7 in seiner Mitte eine Bohrung auf, mit Hilfe derer die Walze gelagert bzw. befestigt werden kann. In dieser Ausführungsform ist es vorgesehen, dass die Achse 2 starr befestigt wird und sich nur die Scheiben 3 drehen.

FIG. 7 zeigt eine schematische Schnittansicht entlang der Linie A - A von FIG. 6. Hier ist zu sehen, wie von außen über das Ventil 8 und einen Durchgang im Stopfen 6 der Innendruck in der Walze gesteuert werden kann. Der Ausschnitt der Achse 2 auf ihrer unteren Seite ist ebenfalls zu sehen. Wie in FIG. 5 ist auch in diesem Beispiel der Innendruck in der Walze nicht hoch genug bzw. die Walzeachse ist so hoch über den Materialbahnen, dass die Trennschicht noch keine Kraft auf die Scheiben 3 ausübt.

## Patentansprüche

1. Walze (1) zum Ausüben von Anpressdruck auf eine oder mehrere Materialbahnen (10, 11), wobei die Walze (1) eine Walzenachse (2) aufweist, auf der sich eine Mehrzahl von Scheiben (3) befinden, wobei die Scheiben (3) radial beweglich sind und den Anpressdruck auf die eine oder mehreren Materialbahnen (10, 11) ausüben,
wobei der Anpressdruck der Scheiben (3) pneumatisch oder hydraulisch ausgeübt werden kann,
wobei der Anpressdruck der Scheiben (3) über einen Innendruck im Inneren der Walze (1) gesteuert werden kann, und
wobei die Walzenachse (2) eine Hohlachse ist, die einen Ausschnitt aufweist, so dass über den Innendruck in einem Walzenachseninnenkörper (4), der sich in der Walzenachse (2) befindet, der Anpressdruck der Scheiben (3) gesteuert werden kann.

2. Walze (1) nach Anspruch 1, wobei der Innendruck im Inneren der Walze (1) räumlich gerichtet auf die Scheiben (3) wirkt.

3. Walze (1) nach Anspruch 1, wobei der Walzenachseninnenkörper einen Schlauch (4) und eine schlauchförmige Trennschicht (5) aufweist, wobei die Trennschicht (5) den Schlauch (4) umgibt und sich zwischen Schlauch (4) und Scheiben (3) befindet.

4. Walze (1) nach Anspruch 3, wobei die Trennschicht (5) direkt auf dem Schlauch (4) aufgebracht ist.

5. Walze (1) nach Anspruch 3 oder 4, wobei die Trennschicht (5) zumindest teilweise aus Federblech, insbesondere aus Federstahl-Kammblech, oder Folie besteht.

6. Walze (1) nach einem der Ansprüche 3 bis 5, wobei der Schlauch (4) an seinen beiden Seiten durch je einen Stopfen (6) verschlossen ist.

7. Walze (1) nach Anspruch 6, wobei der Innendruck in dem Schlauch durch ein Ventil (8) in einem der Stopfen (6) gesteuert werden kann.

8. Walze (1) nach einem der vorhergehenden Ansprüche, wobei die Scheiben (3) seitlich durch Stellringe (7) auf der Achse (2) gehalten werden.

9. Walze (1) nach einem der vorhergehenden Ansprüche, wobei die Scheiben (3) eine Anti-Haftbeschichtung aufweisen.

10. Walze (1) nach einem der Ansprüche 6 bis 9, wobei der Anpressdruck über die Steuerung des Innendrucks des Walzenachseninnenkörpers während des Betriebs der Walze (1) änderbar ist.

11. Verwendung einer Walze (1) bei der Laminierung von Materialbahnen (10, 11), insbesondere bei der Laminierung im Rahmen von Reifenherstellung, wobei die Walze (1) gemäß einem der Ansprüche 1 bis 10 gebildet ist.

## Claims

1. A roller (1) for applying contact pressure to one or multiple webs of material (10, 11), wherein the roller (1) has a roller shaft (2) on which a plurality of disks (3) are located, wherein the disks (3) are moveable in radial direction and exert contact pressure to said one or multiple webs of material (10, 11),
wherein the contact pressure of the disks (3) can be applied pneumatically or hydraulically,
wherein the contact pressure of the disks (3) can be controlled via an internal pressure inside the roller (1), and
wherein the roller shaft (2) is hollow shaft which has a recess, so that the contact pressure of the disks (3) can be controlled via the internal pressure in an inner roller shaft body (4) which is arranged in the roller shaft (2).

2. The roller (1) of claim 1, wherein the internal pressure inside the roller (1) acts in the direction of the disks (3).

3. The roller (1) of claim 1, wherein the inner roller shaft body comprises a tube (4) and a tube-shaped separating layer (5), wherein the separating layer (5) encloses the tube (4) and is located between the tube (4) and the disks (3).

4. The roller (1) of claim 3, wherein the separating layer (5) is directly applied on the tube (4).

5. The roller (1) of claim 3 or 4, wherein the separating layer (5) is at least partially made of a spring steel sheet, in particular a comb plate made of spring steel, or of foil.

6. The roller (1) of one of claims 3 to 5, wherein the tube (4) is closed at each end by a plug (6).

7. The roller (1) of claim 6, wherein the pressure inside the tube may be controlled with a valve (8) in one of the plugs (6).

8. The roller (1) of one of the preceding claims, wherein the disks (3) are secured on the shaft (2) by retaining collars (7).

9. The roller (1) of one of the preceding claims, wherein the disks (3) have a non-stick coating.

10. The roller (1) of one of claims 6 to 9, wherein the contact pressure can be adjusted by controlling the internal pressure of the inner roller shaft during operation of the roller (1).

11. Use of a roller (1) for the lamination of webs of material (10, 11), in particular for the laminating process in the production of tires, wherein the roller (1) is designed according to one of claims 1 to 10.

## Revendications

1. Cylindre (1) pour exercer une pression de contact sur une ou plusieurs bandes de matériau (10, 11), dans lequel le cylindre (1) comprend un axe de cylindre (2) sur lequel se trouve une pluralité de disques (3), les disques (3) étant déplaçables radialement et exerçant la pression de contact sur lesdites une ou plusieurs bandes de matériau (10, 11),
dans lequel la pression de contact des disques (3) peut être exercée par voie pneumatique ou hydraulique,
dans lequel la pression de contact des disques (3) peut être commandée via une pression interne à l'intérieur du cylindre (1), et
dans lequel l'axe du cylindre (2) est un axe creux qui présente une découpe, de sorte que la pression de contact des disques (3) peut être commandée via la pression intérieure dans un corps intérieur d'axe de cylindre (4) qui se trouve dans l'axe de cylindre (2).

2. Cylindre (1) selon la revendication 1, dans lequel la pression interne à l'intérieur du cylindre (1) agit sur les disques (3) de manière orientée dans l'espace.

3. Cylindre (1) selon la revendication 1, dans lequel le corps intérieur d'axe de cylindre comprend un tuyau (4) et une couche de séparation (5) semblable à un tuyau, et dans lequel la couche de séparation (5) entoure le tuyau (4) et se trouve entre le tuyau (4) et les disques (3).

4. Cylindre selon la revendication 3, dans lequel la couche de séparation (5) est appliquée directement sur le tuyau (4).

5. Cylindre selon la revendication 3 ou 4, dans lequel la couche de séparation (5) est au moins partiellement en tôle à ressort, en particulier en tôle à lamelles en acier-ressort, ou en feuille.

6. Cylindre selon l'une des revendications 3 à 5, dans lequel le tuyau (4) est obturé par un bouchon respectif (6) sur ses deux côtés.

7. Cylindre (1) selon la revendication 6, dans lequel la pression interne dans le tuyau peut être commandée via une valve (8) dans l'un des bouchons (6).

8. Cylindre (1) selon l'une des revendications précédentes, dans lequel les disques (3) sont maintenus latéralement sur l'axe (2) par des bagues de positionnement (7).

9. Cylindre (1) selon l'une des revendications précédentes, dans lequel les disques (3) comportent un revêtement anti-adhésion.

10. Cylindre (1) selon l'une des revendications 6 à 9, dans lequel la pression de contact peut être modifiée pendant le fonctionnement du cylindre (1) via la commande de la pression interne du corps intérieur de l'axe de cylindre.

11. Utilisation d'un cylindre (1) lors de la stratification de bandes de matériau (10, 11), en particulier lors de la stratification dans le cadre de la production de pneumatiques, dans laquelle le cylindre (1) est formé selon l'une des revendications 1 à 10.
